# EUROPÄISCHE PATENTSCHRIFT

(11) **EP 0 750 150 B1**
(45) Veröffentlichungstag und Bekanntmachung des Hinweises auf die Patenterteilung: **24.01.2001**
(21) Anmeldenummer: 96108812.7
(22) Anmeldetag: 01.06.1996
(51) Int. Cl.: F16L 33/22

(54) **Steckverbindung für den Anschluss von Rohr- und Schlauchleitungen**
Plug-in connector for the connection of pipes and hoses
Raccord enfichable pour la connexion de tuyaux rigides et souples

(30) Priorität: 22.06.1995 DE 19522691
(43) Veröffentlichungstag der Anmeldung: 27.12.1996
(73) Patentinhaber: DIPL.-ING. HENN GES.M.B.H. & CO.KG., A-6890 Lustenau (AT)
(72) Erfinder: Profunser, Herbert, 6832 Muntlix (AT)
(74) Vertreter: Riebling, Peter, Dr.-Ing.

(56) Entgegenhaltungen:
- EP-A- 0 559 505
- DE-A- 3 813 192
- DE-C- 3 815 167
- FR-A- 2 667 922

## Beschreibung

Die Erfindung betrifft eine Anordnung mit Rohrstutzen und Steckverbindung für den Anschluß von Rohr- und Schlauchleitungen nach dem Oberbegriff des Patentanspruchs 1.

Eine derartige Steckverbindung ist beispielsweise mit dem Gegenstand der DE 38 13 192 A1 bekannt geworden.

Diese Steckverbindung besteht im wesentlichen aus einer Kunststoffaußenhülse, die mit einem Dichtabsatz in eine entsprechende Aufnahme an der Innenhülse eingreift, wobei die Innenhülse eine radial sich nach außen öffnende Nut, in der ein Dichtring eingelegt ist, aufweist.

Bei dieser erfindungsgemäßen Steckkupplung besteht der Nachteil, daß die Kunststoff-Außenhülse als relativ dickwandiges Kunststoffteil ausgebildet sein muß, welches sehr platzverbrauchend ist, weil bei entsprechender Kraftübertragung ein Kunststoffteil wesentlich stärker dimensioniert werden muß, als vergleichsweise eine aus Metall bestehende Außenhülse.

Die bei dieser vorbeschriebenen Steckkupplung zum Verbinden eines Schlauches mit einem Rohr zwischen der Innen- und der Außenhülse im Bereich eines radial nach innen weisenden Steges der Außenhülse gegebene Abdichtung weist die Gefahr auf, daß das zu transportierende Medium in die nicht abgedichtete Stirnseite des Schlauches eindringt und somit das Schlauchgewebe oder - gestrick mit den bekannt nachteiligen Folgen durchtränkt.

Aus der FR 26 67 922 A1 ist weiterhin eine Steckkupplung bekannt, die im wesentlichen aus einer mit einer Außenhülse verbundenen Innenhülse und einem, das Feder-Rasteil aufweisenden, über einen in einer Nut des Außenteils zugeordneten Dichtring mit dem Außenteil verbundenen Rohrstutzen besteht.

Bei der Steckkupplung gemäß dieser Druckschrift besteht der Nachteil, daß die radial nach außen geöffnete, den Dichtring aufnehmende Nut allein aus der Innenhülse geformt, was mit hohem Herstellungsaufwand verbunden ist. Eine derartige einstückige Nut kann nur mit einem relativ komplizierten Bördelvorgang in eine Metallhülse eingebördelt werden, wodurch zusätzliche Kosten bei der Herstellung derartiger Steckkupplungen entstehen.

Die Herstellung einer Nut durch einen Bördelvorgang bei Steckkupplungen gemäß der FR 26 67 922 A1 hat den weiteren Nachteil, daß die Radien an der Flanke der Nut, d.h. also dort, wo die vertikalen Wände nach oben steigen, relativ groß ausgebildet sind und damit die Gefahr besteht, daß ein unter Druck befindlicher Dichtring in diese großen Räume hineinverdrängt wird und dann seine Dichtfunktion an dem gegenüberliegenden Teil nicht mehr erfüllen kann.

Ein weiterer wesentlicher Nachteil besteht bei der FR 26 67 922 A1 darin, daß eine relativ große axiale Länge zwischen der Verbindung von Innen- und Außenhülse und dem Dichtungsring besteht, so daß der Einschubraum für den Schlauch in den Verbindungsbereich zwischen Innen- und Außenhülse relativ kurz (kurze axiale Länge) ausgebildet ist und der Schlauch daher nur auf relativ kurze axiale Länge unterstützt und gehalten wird. Um eine im Einsatzzweck genügende axiale Unterstützungslänge des Schlauches der gemäß FR 26 67 922 A1 ausgebildeten Steckkupplung zu gewährleisten, muß diese Kupplung in ihrer axialen Länge dementsprechend materialaufwendig und damit kostenungünstig dimensioniert sein.

Der Erfindung liegt die Aufgabe zugrunde, eine Anordnung mit Rohrstutzen und Steckverbindung für den Anschluß von Rohr- und Schlauchleitungen vorzuschlagen, welche bei kompakten Abmessungen eine sichere Verbindung gewährleistet, wobei ein nahezu gleichbleibender Durchflußquerschnitt beibehalten wird und die Dichtwirkung mit Hilfe des flüssigen oder gasförmigen, die Steckverbindung durchfließenden Mediums erhöht wird.

Zur Lösung der gestellten Aufgabe ist die Erfindung durch die technische Lehre des Anspruchs 1 gekennzeichnet.

In einer Ausführungsform der Erfindung ist vorgesehen, auf den Dichtungsring zu verzichten und den Schlauch selbst als Dichtungsmittel zu verwenden. Wesentlicher Vorteil dieser Anordnung besteht darin, daß im Kupplungsbereich der Durchflußquerschnitt nicht vermindert wird.

Hierbei ist vorgesehen die Innenhülse mit einer Anschrägung zu versehen, so daß sich der auf die Innenhülse aufgeschobene Schlauch radial aufweitet. Die Außenhülse ist hierbei kürzer ausgebildet als die Innenhülse, so daß sich eine Öffnung bildet, durch welche die als Dichtlippe wirkende Außenkante der Schlauchstirnfläche hindurchragt.

Die entstehende Dichtlippe des Schlauches übernimmt die Aufgabe eines Dichtringes.

Vorteilhaft wird die Dichtlippe mit einem Radius oder einer Fase versehen, um das Einschieben des Kupplungssteckers in die Bohrung des Rohrstutzens zu erleichtern und die Dichtlippe vor mechanischer Beschädigung zu schützen.

Es kann durch gerippte Ausbildung der Anschrägung der Innenhülse erreicht werden, daß das Druckmedium die Dichtwirkung der Dichtlippe unterstützt, wobei je nach Druck die Dichtlippe an die Innenwandung des Rohrstutzens gepresst wird.

Diese Kupplungskonstruktion reduziert die Dichtstellen der Steckverbindung auf nur eine Dichtstelle. Zudem werden bei dieser Bauart, außer dem Anschlußstutzen, nur zwei Bauteile benötigt, eine Innenhülse und eine Außenhülse.

Die mechanische formschlüssige Verbindung des Kupplungssteckers mit dem Rohrstutzen erfolgt über Rastnasen und ein Rastteil, welches aus Federstahldraht oder einer an den Rohrstutzen angeformten Rasteinrichtung bestehen kann.

Der Vorteil dieser erfindungsgemäßen Steckkupplung aus Metallhülsen liegt insbesondere in der platz- und materialsparenden und damit kostengünstigen Ausführungsform bei gleichzeitig hervorragenden Dichtungseigenschaften durch die in axialer Richtung relativ lang ausgebildete Dichtverbindung.

Der Gegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Dabei zeigt:
- Figur 1:: einen Schnitt der Steckverbindung in einer Ausführungsform;
- Figur 2:: Teilschnitt der Ausführungsform nach Figur 2.

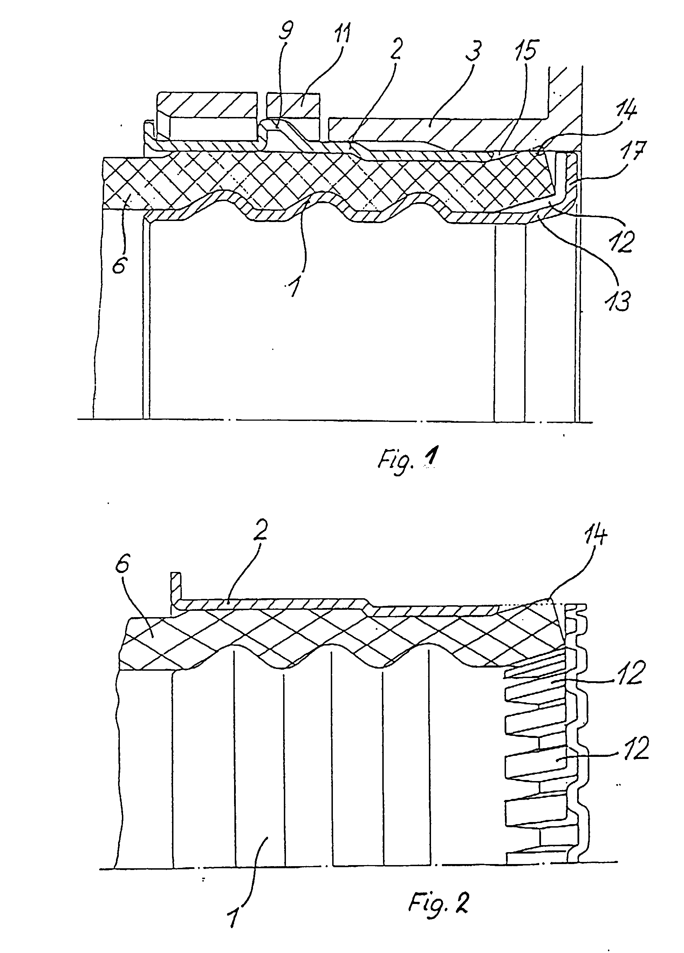

Gemäss Figur 1 besteht die Steckverbindung im wesentlichen aus einer Innenhülse 1, einer Außenhülse 2 und einem über die Außenhülse 2 gesteckten Rohrstutzen 3.

Die Figuren 1 und 2 zeigen eine Ausführungsform der Steckverbindung, bei der der Schlauch 6 selbst als Dichtung Verwendung findet.

Die Innenhülse 1 wird in den Innenraum des Schlauches 6 eingesteckt und zwar soweit, daß der Schlauch 6 am Bund 17 der Innenhülse 1 anschlägt. Die Wandung der Innenhülse 1 ist so verformt, daß sich umlaufende Verformungsnuten ergeben und der Schlauch 6 zwischen Innenhülse 1 und Außenhülse 2 geklemmt wird.

Die Außenhülse 2 wird auf den Außenumfang des Schlauches 6 aufgeschoben, wobei aber die Außenhülse 2 kürzer ausgebildet ist als die Innenhülse 1, so daß Außenhülse 2 und Innenhülse 1 nicht miteinander verbunden sind.

Das axiale Ende der Innenhülse 1 weist eine umlaufende Anschrägung 13 auf, durch welche der Schlauch 6 in diesem Bereich konisch aufgeweitet wird.

Die Anschrägung 13 weitet den Schlauch 6 innerhalb der Öffnung 15 soweit auf, daß die Außenkante der Stirnfläche des Schlauches 6 über die Außenhülse 2 hervorsteht und eine Dichtlippe 14 bildet. Die Dichtlippe 14 ist vorteilhaft mit einem Radius oder einer Fase versehen.

Wird der Rohrstutzen 3 auf die Anordnung aufgeschoben, so liegt die Dichtlippe 14 dichtend an der Innenwandung des Rohrstutzens 3 an.

Wiederum wirkt das Druckmedium auf die Anschrägung 13, wobei die Druckkraft auf die Dichtlippe 14 weitergegeben wird, welche verstärkt an die Innenwandung des Rohrstutzens 3 gepresst wird.

Figur 2 verdeutlicht, daß die Anschrägung 13 vorteilhaft gerippt ausgebildet ist. Diese Rippen 12 vergrößern die Angriffsfläche für das Druckmedium und verstärken dadurch die Anpresskraft der Dichtlippe 14 am Rohrstutzen 3.

## Patentansprüche

1. Anordnung mit Rohrstutzen und Steckverbindung, wobei die Steckverbindung für den Anschluß von Rohr- und Schlauchleitungen vorgesehen ist, insbesondere zur Verwendung für Rohrleitungssysteme von Kraftfahrzeugen, bestehend aus einer Innenhülse (1) und einer Außenhülse (2), welche zwischen sich eine Rohr- oder Schlauchleitung (6) aufnehmen, so daß ein Rohrstutzen (3) über die Außenhülse (2) geschoben werden kann, der mit Hilfe eines Sicherungsmittels mit der Außenhülse (2) verrastbar ist, **dadurch gekennzeichnet**, daß die Innenhülse (1) eine Anschrägung (13) aufweist und sich dadurch der über die Anschrägung (13) bis zu einem Bund (17) aufgeschobene Schlauch (6) radial aufweitet, wobei die Außenhülse (2) kürzer ist als die Innenhülse (1), so daß sich eine Öffnung (15) bildet, durch welche die als Dichtlippe (14) wirkende Außenkante der Schlauchstirnfläche hindurch ragt und sich dichtend am Innenumfang des Rohrstutzens (3) anlegt.

2. Steckverbindung nach Anspruch 1, **dadurch gekennzeichnet,** daß die Anschrägung (13) der Innenhülse (1) entlang des Umfangs mit Rippen (12)oder Öffnungen versehen ist, für die ungehinderte Zuleitung des Druckmediums an die Dichtlippe (14).

3. Steckverbindung nach Anspruch 1 oder 2, **dadurch gekennzeichnet**, daß die Dichtlippe (14) mit einem Radius oder einer Fase versehen ist.

## Claims

1. Arrangement with pipe-socket and plug and socket connection, in which the plug and socket connection is intended for connecting pipes and hoses, in particular for pipework systems of motor vehicles, comprising an inner sleeve (1) and an outer sleeve (2) between which a pipe or hose-line (6) is held so that a pipe-socket (3) can be slipped over the outer sleeve (2) and is locatable with the outer sleeve (2) by retaining means, characterized in that the inner sleeve (1) has a bevel (13) which radially expands the hose (6) when said hose is pushed over said bevel as far as a shoulder (17), wherein the outer sleeve (2) is shorter than the inner sleeve (1) so that an opening (15) is formed through which the outer edge of the end face of the hose, which acts as a sealing lip (14), projects to make sealing contact with the inner circumference of the pipe-socket (3).

2. Plug and socket connection according to Claim 1, characterized in that the bevel (13) of the inner sleeve (1) is provided around its circumference with ribs (12) or openings for the unobstructed access of the pressure medium to the sealing lip (14).

3. Plug and socket connection according to Claim 1 or 2, characterized in that the sealing lip (14) is provided with a radius or chamfer.

## Revendications

1. Dispositif composé d'une tubulure et d'un raccord, lequel raccord est prévu pour relier des conduites rigides et des conduites souples, en particulier pour des systèmes de conduites rigides pour véhicules automobiles, comprenant un manchon intérieur (1) et un manchon extérieur (2) qui reçoivent entre eux une conduite rigide ou souple (6), de sorte qu'on peut enfiler sur le manchon extérieur (2) une tubulure (3) qui est apte à être verrouillée avec le manchon extérieur (2) à l'aide d'un moyen de blocage, **caractérisé** en ce que le manchon intérieur (1) présente une partie inclinée (13) et le tuyau (6) enfilé sur cette partie inclinée (13) jusqu'à une collerette (17) s'élargit ainsi radialement, étant précisé que le manchon extérieur (2) est plus court que le manchon intérieur (1), de sorte qu'il se forme une ouverture (15) par laquelle le bord extérieur de la surface frontale du tuyau, qui agit comme une lèvre d'étanchéité (14), dépasse et s'applique de manière étanche contre la périphérie intérieure de la tubulure (3).

2. Raccord selon la revendication 1, **caractérisé** en ce que la partie inclinée (13) du manchon intérieur (1) est pourvue, le long de sa périphérie, de nervures (12) ou d'ouvertures pour que l'agent de pression puisse être amené sans entraves jusqu'à la lèvre d'étanchéité (14).

3. Raccord selon la revendication 1 ou 2, **caractérisé** en ce que la lèvre d'étanchéité (14) est dotée d'un rayon ou d'un biseau.
